Europäisches Patentamt

**European Patent Office**

Office européen des brevets

(11) Numéro de publication: **0 443 908 B1**

## FASCICULE DE BREVET EUROPEEN

(45) Date de publication de fascicule du brevet: **30.11.94**

(51) Int. Cl.5: **G01L 11/00**, G01N 21/33, G01K 11/00

(21) Numéro de dépôt: **91400341.3**

(22) Date de dépôt: **12.02.91**

(54) **Procédé et système de mesure optique de la pression de l'air par excitation laser, notamment en avant d'un aéronef.**

(30) Priorité: **22.02.90 FR 9002181**

(43) Date de publication de la demande:
**28.08.91 Bulletin 91/35**

(45) Mention de la délivrance du brevet:
**30.11.94 Bulletin 94/48**

(84) Etats contractants désignés:
**DE GB**

(56) Documents cités:
**WO-A-86/02445**
**FR-A- 2 508 639**
**US-A- 4 493 553**

**OPTICS LETTERS, vol. 13, no. 3, mars 1988, pages 195-197; B. MILES et al.:"Proposed single-pulse two-dimensional temperature and density measurements of oxygen and air"**

**REVIEW OF SCIENTIFIC INSTRUMENTS, vol. 58, no. 12, décembre 1987, pages 2226-2237, New York, US; G.K. SCHWEMMER et al.: "A lidar system for measuring atmospheric pressure and temperature profiles"**

(73) Titulaire: **SEXTANT AVIONIOUE S.A.**
**5/7 rue Jeanne Braconnier**
**Parc Tertiaire**
**F-92366 Meudon la Forêt Cédex (FR)**

(72) Inventeur: **Fima, Henri**
**Lotissement le Vercors**
**F-26120 Malissard (FR)**

(74) Mandataire: **Bloch, Gérard et al**
**2, square de l'Avenue du Bois**
**F-75116 Paris (FR)**

Rank Xerox (UK) Business Services
(3.10/3.09/3.3.3)

EP 0 443 908 B1

## Description

La présente invention concerne un procédé et un système de mesure optique à distance de la pression de l'air, notamment en avant d'un aéronef, dans une zone non perturbée par son déplacement.

La pression de l'air est l'un des paramètres qui servent, pour le contrôle et le pilotage de l'aéronef, à l'élaboration puis à l'affichage de certains des paramètres de l'aéronef, comme par exemple sa vitesse par rapport à l'air, le nombre de Mach, sa vitesse par rapport au sol, son altitude, son réglage de puissance.

Un anémomètre conventionnel, appelé badin, par exemple, comporte des prises de pression statique et un tube de Pitôt de prise de pression totale. Mais la mesure d'un badin est entachée d'erreur due aux perturbations aérodynamiques provoquées par le déplacement de l'aéronef. Il était donc à priori intéressant d'inventer une mesure optique de pression éliminant les inconvénients de la barométrie classique, pour obtenir la pression vraie de l'air ambiant.

On connait déjà, par le document US-A-4 493 553, un procédé de mesure optique à distance de la pression de l'air par excitation laser, dans lequel, ayant déterminé la température de l'air, on provoque, à l'aide d'un générateur laser de raie très fine et par excitation d'une raie d'absorption de l'oxygène moléculaire, un rayonnement rétrodiffusé, on mesure les énergies rétrodiffusées à deux distances différentes, on détermine le rapport de ces énergies, on en déduit un coefficient d'absorption, fonction de la température et de la densité moléculaire d'oxygène, on calcule la densité et donc la pression.

Mais la distribution spectrale du rayonnement à l'aller et au retour n'est pas la même, si bien que le coefficient d'atténuation du rayonnement émis et le coefficient d'atténuation du rayonnement rétrodiffusé peuvent ne pas être les mêmes. La mesure de pression s'en trouverait alors entachée d'erreur.

Fait aussi partie de l'état de la technique l'article "Proposed single-pulse two dimensional temperature and density measurements of oxygen and air, Miles et al., March 1988, vol. 13, n 3, Optics letters". Ce document enseigne d'utiliser un laser ArF accordé sur une transition UV de l'oxygène et d'observer simultanément la fluorescence et la diffusion Rayleigh. A absorption faible, l'intensité de la rétrodiffusion Rayleigh est proportionnelle à la densité moléculaire et indépendante de la température dans la bande d'accord du laser ArF, tant que la température est inférieure à 500 K. La diffusion Rayleigh permet d'établir une image spatiale de la densité. Pour obtenir la valeur absolue de la densité, il faut procéder à un étalonnage. Cette méthode de mesure a par conséquent des limites.

La présente invention vise donc, d'abord, à proposer un procédé de mesure optique de la pression de l'air, à distance, et qui soit pleinement satisfaisant.

A cet effet, la présente invention concerne un procédé de mesure optique à distance de la pression de l'air par excitation laser, dans lequel, ayant déterminé la température de l'air, on provoque, à l'aide d'un générateur laser de raie très fine et par excitation d'une raie d'absorption de l'oxygène moléculaire, un rayonnement rétrodiffusé, on mesure les énergies rétrodiffusées à deux distances différentes, on détermine le rapport de ces énergies, on en déduit un coefficient d'absorption, fonction de la température et de la densité moléculaire d'oxygène, et on calcule la densité et donc la pression, caractérisé par le fait qu'on excite une raie d'absorption appartenant à une bande de Schumann-Runge de l'oxygène moléculaire et que la raie d'absorption est très large par rapport au spectre de diffusion Rayleigh.

Avantageusement,
- le générateur laser émet deux raies d'émission successives très fines par rapport à la raie d'absorption et décalées en fréquence,
- l'une des raies d'émission laser se trouve à l'intérieur de la raie d'absorption, l'autre, à l'extérieur,
- pour déterminer la température, on procède à une mesure optique à distance et on excite, à l'aide du générateur laser, deux raies d'absorption qui au moins se recouvrent et qui appartiennent respectivement à deux bandes différentes de Schumann-Runge de l'oxygène moléculaire, la raie d'émission du générateur laser a une largeur très faible par rapport à celle des raies d'absorption et sa fréquence centrale est ajustée pour être au voisinage des maxima des deux raies d'absorption, on provoque la fluorescence de l'oxygène, on mesure les intensités de fluorescence induite dans deux bandes différentes, on détermine le rapport de ces intensités et on en déduit la température.

De préférence, on détermine la température et la pression de l'air en avant d'un aéronef dans une tranche d'air sans perturbations aérodynamiques et on en déduit des paramètres de vol de l'aéronef qu'on utilise pour son pilotage.

La présente invention concerne également un système de mesure pour la mise en oeuvre du procédé de mesure de l'invention, caractérisé par le fait qu'il comporte un générateur laser émettant un rayonnement de raie très fine, une optique d'émission du rayonnement d'excitation, une optique de réception du rayonnement de fluorescence et de rétrodiffusion, des moyens de séparation du rayonnement de rétrodiffusion et du rayonnement de fluorescence, un détecteur de réception du rayonnement de rétrodiffusion, des moyens de séparation des deux énergies de fluorescence, des détecteurs accordés respectivement sur les fréquences de fluorescence et un module de traitement et calcul.

L'invention sera mieux comprise à l'aide de la description suivante des principes théoriques sur lesquels se fonde l'invention, de la mise en oeuvre préférée de l'invention ainsi que de la forme de réalisation préférée du système de l'invention, en référence aux dessins annexés, sur lesquels

- la figure 1 est une représentation schématique de niveaux d'énergies électroniques, vibratoires et rotatoires d'une molécule;
- la figure 2 est une représentation de deux raies d'absorption et d'une raie d'excitation laser;
- la figure 3 est une représentation schématique du système de mesure de pression de l'invention;
- la figure 4 est une représentation spatiotemporelle de la tranche d'air sondée, pour la température;
- la figure 5 est une représentation de bandes d'absorption de Schumann-Runge dans la bande d'accrochage du laser ArF;
- la figure 6 est une représentation des spectres d'absorption et de rétrodiffusion de l'art antérieur, avec la raie laser;
- la figure 7 est une autre représentation spatiotemporelle d'une des tranches d'air sondée, pour la pression et
- la figure 8 est une représentation de la raie d'absorption, pour la mesure de pression, avec deux raies laser.

L'énergie globale d'une molécule est la somme de son énergie électronique, de son énergie vibratoire et de son énergie rotatoire. Cette énergie globale, depuis un état électronique fondamental, de plus basse énergie, peut occuper une série de niveaux excités différents. A chaque niveau d'énergie électronique, fondamental et excité, sont associés plusieurs niveaux rapprochés d'énergie vibratoire à chacun desquels sont associés plusieurs niveaux encore plus rapprochés d'énergie rotatoire correspondant à plusieurs valeurs du nombre quantique de rotation J. L'énergie électronique et vibratoire d'une molécule passe à un niveau supérieur notamment par excitation, c'est-à-dire par absorption de photons, par exemple issus d'un rayonnement laser. L'énergie électronique et vibratoire d'une molécule passe à un niveau inférieur notamment par fluorescence, c'est-à-dire par émission spontanée de photons.

Deux niveaux vibratoires distincts $E_i$ et $E_j$ d'énergie électronique et vibratoire définissent une bande, d'absorption ou de fluorescence, regroupant l'ensemble des transitions possibles entre deux niveaux d'énergie rotatoire associés respectivement à ces deux niveaux. d'énergie électronique et vibratoire. A une transition $E_i(J_k)$, $E_j(J_l)$ correspond une raie spectrale, théoriquement de fréquence déterminée

$$\nu = \frac{E_j(J_l) - E_i(J_k)}{h}$$

h étant la constante de Planck.

En réalité, du fait de l'agitation thermique (effet Doppler) et des collisions, une raie, courbe représentative du coefficient d'absorption en fonction de la pulsation $\omega = 2\pi\nu$, est élargie en fréquence (pulsation).

La pression p de l'air, selon la loi des gaz parfaits, s'exprime par la relation

$$p = N_A \frac{1}{1-q} kT$$

dans laquelle
$N_A$ est la densité moléculaire d'air sec,

q est la concentration en volume de vapeur d'eau,

k est la constante de Boltzmann,

T est la température.

Dans l'air sec, le rapport de mélange de l'oxygène est constant et égal à 20,95 %. $N_o$ étant la densité moléculaire d'oxygène,

$$N_A = \frac{N_O}{0,2095} \quad .$$

En conséquence, si q et T sont connues, la détermination de $N_o$ permet de calculer p.

Mesure différentielle d'absorption d'un faisceau laser

Le principe de la mesure consiste à calculer le coefficient d'absorption $\alpha(\omega)$ dans la région centrale d'une raie d'absorption moléculaire de l'oxygène en faisant le rapport des énergies rétrodiffusées à deux distances différentes et provenant d'une impulsion laser de largeur spectrale très fine par rapport à la raie considérée.

Comme le coefficient $\alpha$ est une fonction de la densité moléculaire d'oxygène et de la température, si on connait la température, la mesure de $\alpha$ permet de calculer la densité et donc la pression.

Mais pour cela, il faut que soit vérifiée l'hypothèse selon laquelle le coefficient d'atténuation pour le rayonnement émis, d'une part, et pour le rayonnement rétrodiffusé, d'autre part, est le même, c'est-à-dire que le facteur d'atténuation sur une distance D parcourue deux fois, à l'aller et au retour, est égal à $e^{-2\,\alpha\,D}$. Or cette hypothèse n'est généralement pas vérifiée, car la distribution spectrale de rayonnement n'est pas la même à l'aller et au retour.

Le rayonnement rétrodiffuse provient essentiellement, d'une part, des aérosols et, d'autre part, de la diffusion Rayleigh moléculaire.

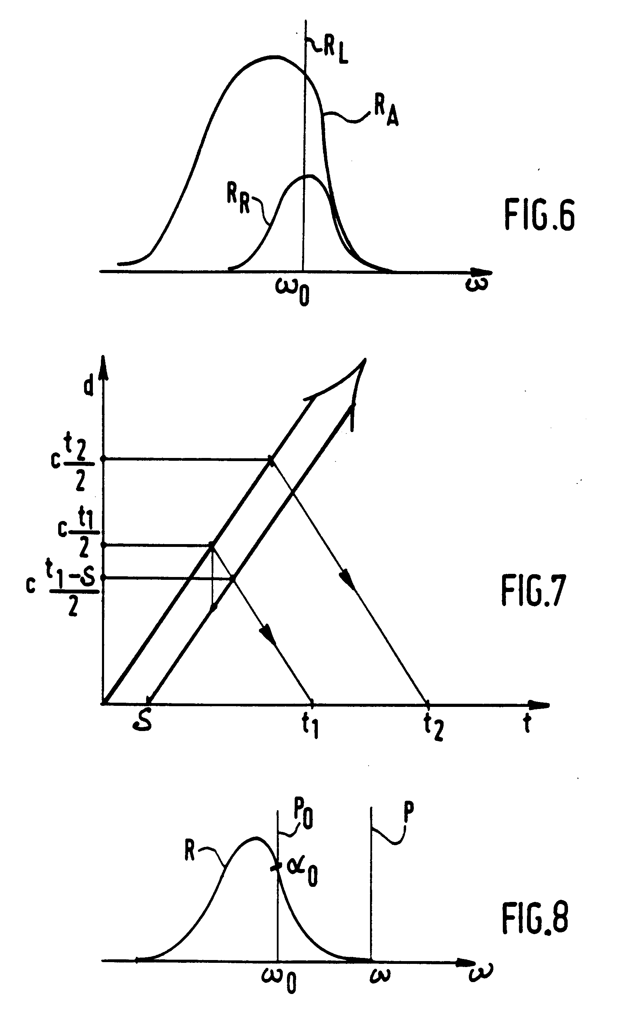

Admettons que la raie laser $R_L$ soit pratiquement monochromatique, $\omega_0$, à l'échelle de la raie d'absorption $R_A$ (figure 6). Les aérosols ont une vitesse d'agitation très faible de sorte que leur spectre de rétrodiffusion, dans un repère immobile par rapport à l'air, est aussi monochromatique, de pulsation $\omega_0$ . Quant au spectre de rétrodiffusion $R_R$ des molécules, du fait de l'effet Doppler de l'agitation thermique, il est très élargi. Il est facile de constater que, par exemple dans le cas de la bande A de l'oxygène centrée à 0,76 $\mu$m de longueur d'onde, la largeur globale d'une raie d'absorption en basse altitude peut varier entre 2,5 et 5 fois la largeur Doppler et que, à partir de 15 km d'altitude, la largeur de la raie d'absorption est peu supérieure à la largeur Doppler. La largeur d'une raie d'absorption est au maximum égale à 2,5 fois la largeur du spectre de diffusion Rayleigh et devient même deux fois plus petite en haute altitude. L'atténuation moyenne de la rétrodiffusion sur une distance D n'est donc pas égale à

$$e^{-(\alpha / \omega_o)\, D}$$

mais à une moyenne pondérée des intensités relatives de la diffusion des aérosols et des molécules. Cette atténuation dépend de paramètres variables dans l'espace et le calcul de l'atténuation globale sur le trajet retour, si tout le spectre de rétrodiffusion est reçu, est impossible. Il faudrait filtrer le rayonnement reçu à travers une bande spectrale centrée sur la fréquence du laser et très étroite par rapport à la raie d'absorption. Cela est possible, par détection cohérente, mais c'est particulièrement délicat.

o

o o

Pour pouvoir pratiquement mettre en oeuvre une mesure différentielle d'absorption d'un faisceau laser, il faut donc trouver des raies d'absorption très larges par rapport au spectre de diffusion Rayleigh.

Considérons les bandes de Schumann-Runge de l'oxygène moléculaire diatomique. Elles présentent en l'occurence des particularités intéressantes (Atlas of the Schumann-Runge absorption bands of $O_2$ in the

wavelength region 175-205 nm, Yoshino et al., J. Phys. Chem. Ref. Data, vol. 13, n 1, 1984).

Ces bandes regroupent les transitions de l'état électronique fondamental $^3\Sigma_g^-$, noté X, à l'état électronique excité $^3\Sigma_u^-$, noté B. La fréquence d'excitation correspondant à la transition entre les deux niveaux origines, respectivement de repos et d'excitation, à énergie vibratoire nulle (état vibratoire fondamental), est égale à 49 357 cm$^{-1}$, correspondant à une longueur d'onde de 203 nm. Le spectre des bandes de Schumann-Runge s'étend, dans sa partie discrète, sur tout le domaine de l'ultraviolet, jusqu'à la longueur d'onde minimale de 175 nm. Dans cette zone, il existe le laser à excimère argon-fluor (ArF) accordable dans la bande 192,8 nm-193,6 nm de longueur d'onde. Au-delà, s'étend le continuum de Schumann-Runge, avec une forte section efficace d'absorption

$$\frac{\alpha}{N_o}$$

(la dimension de

$$\frac{\alpha}{N_o}$$

est m$^2$, puisque la dimension de $\alpha$, inverse d'une longueur d'onde, est m$^{-1}$ et celle de $N_o$ est m$^{-3}$).

L'élargissement des raies spectrales des bandes de Schumann-Runge est en fait dû à un phénomène qui domine aussi bien l'effet Doppler que les collisions moléculaires. Il s'agit de la prédissociation des molécules de l'état excité B attribuée à un couplage avec un autre état électronique répulsif. La probabilité de prédissociation Q par unité de temps, est très élevée et elle est indépendante de la température et de la pression. Q dépend en fait des nombres quantiques définissant le niveau d'énergie.

Dans le cas des bandes de Schumann-Runge, les raies d'absorption sont bien très larges par rapport au spectre de diffusion Rayleigh et l'hypothèse évoquée ci-dessus est vérifiée, le facteur d'atténuation est égal à

$$e^{-2\alpha D}$$

La mesure de l'atténuation fournit donc $\alpha$.

$$\alpha = N_o S(T) g(\omega)$$

relation dans laquelle S(T) est l'intensité de la raie et g($\omega$), le profil normalisé de la raie tel que

$$\int \alpha d\omega = N_o S(T)$$

Dans le cas des bandes de Schumann-Runge, du fait de la prépondérance de la prédissociation, g($\omega$) ne dépend pratiquement ni de la température, ni de la pression-densité.

Connaissant la température T, la mesure de $\alpha$ fournit donc $N_o$ et, par conséquent, la pression p.

Mesure à deux raies laser

En réalité, pour que la méthode différentielle décrite ci-dessus soit applicable, même dans le cas des bandes de Schumann-Runge, il faut que la concentration d'aérosols aux deux distances de mesure soit la même.

Quand cette condition n'est pas remplie, on peut quand même s'en affranchir en utilisant une deuxième raie laser très proche mais extérieure à la raie d'absorption considérée et émise à la suite de la première. Cela permet aussi d'éliminer, du coefficient d'atténuation $\alpha$, l'influence du continuum d'absorption de l'oxygène, de la diffusion Rayleigh, de la diffusion des aérosols et de toute absorption résiduelle, notamment celle de l'ozone.

L'utilisation de deux tirs laser légèrement décalés en fréquence complique un petit peu la mise en oeuvre pratique, mais simplifie beaucoup le calcul en évitant d'avoir à modéliser le continuum d'absorption de l'oxygène, au demeurant mal connu (continuum d'Herzberg).

o

o   o

Mesure de la température

Bien sur, la température peut être déterminée par toute méthode classique de thermométrie. Mais disposant déjà d'un laser de mesure de densité, il est préférable de procéder, aussi pour la température, à une mesure optique à distance, par excitation laser.

Considérons deux raies d'absorption $R[E_0(J_0), E_1(J_1)]$ et $R'[E'_0(J'_0), E'_1(J'_1)]$, presque confondues, qui se recouvrent donc partiellement, et qui appartiennent respectivement à deux bandes d'absorption différentes $(E_0, E_1)$ et $(E'_0, E'_1)$ dont les écarts d'énergie entre centres $E_1-E_0$ et $E'_1-E'_0$ sont voisins, selon le schéma des niveaux d'énergie de la figure 6.

Grossièrement, on peut écrire

$$E_1(J_1)-E_0(J_0)=E'_1(J'_1)-E'_0(J_0)$$
$$= h \, \frac{\omega_o}{2\pi}$$
$$= \hbar \, \omega_o$$

Considérons également les bandes de fluorescence $(E_1, E_2)$ et $(E'_1, E'_2)$ telles que les probabilités de transition radiative de $E_1$ à $E_2$ et de $E'_1$ à $E'_2$ soient fortes.

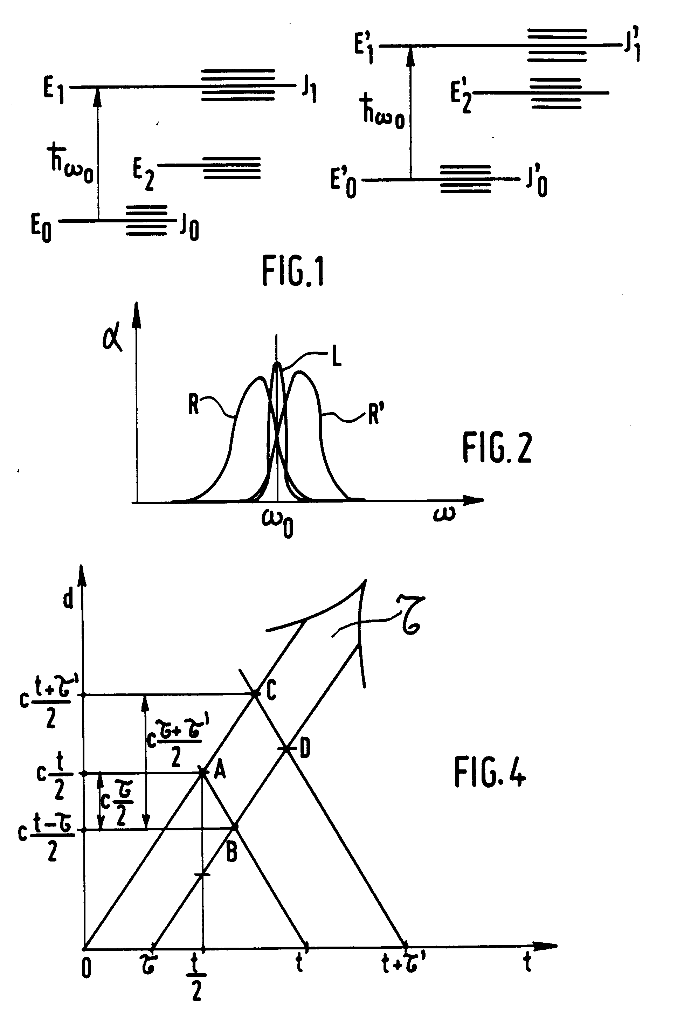

Considérons encore un rayonnement d'excitation L de pulsation $\omega_o$ proche des maxima des deux raies d'absorption considérées R et R', selon le dessin de la figure 2.

Les raies d'absorption R(R'), comme cela a été vu plus haut, ont pour équation

$$\alpha(\omega) = N_o S(T) g(\omega)$$

$g(\omega)$ est généralement fonction de la température T et de la pression p.

Le rapport des intensités de fluorescence, c'est-à-dire le rapport des nombres de photons de fluorescence reçus sur les deux bandes, est, égal au rapport des coefficients d'absorption $\frac{\alpha'}{\alpha}$ multiplié par le rapport des rendements de fluorescence $\frac{\eta'}{\eta}$. Le rendement de fluorescence $\eta$ est le rapport entre le nombre de molécules dont l'énergie est passée du niveau haut $E_1$ au niveau intermédiaire désexcité $E_2$ par émission spontanée de photons et le nombre total de molécules excitées au niveau haut $E_1$ par le rayonnement laser. Les rendements de fluorescence aussi dépendent notamment de la température T et de la pression p.

Si on considère à nouveau, les bandes de Schumann-Runge, comme rappelé ci-dessus, $g(\omega)$ ne dépend pratiquement pas de la température ni de la pression. De même, les rendements de fluorescence ne dépendent pas non plus de la température ni de la pression, la probabilité de prédissociation étant nettement supérieure à la probabilité de transition par collision avec changement d'état vibratoire.

Le rapport des intensités de fluorescence émises sur deux bandes résultant de l'excitation des deux raies quasiment confondues évoquées plus haut, par le générateur laser de raie très fine également évoqué plus haut, dans le cas de deux bandes de Schumann-Runge, ne dépend donc que de la température T et est proportionnel au rapport des intensités des raies

$$\frac{S'(T)}{S(T)}$$

Le facteur exponentiel d'atténuation du faisceau laser est rigoureusement éliminé. L'intensité d'une raie d'absorption étant proportionnelle, comme le coefficient d'absorption, à la population relative du niveau inférieur de la transition, le rapport des intensités de fluorescence est donc sensiblement égal à

$$Ke^{-\frac{E_0'(J_0')-E_0(J_0)}{kT}}$$

k étant la constante de Boltzmann et K une constante. $E'_0$ et $E_0$ étant deux niveaux vibratoires différents, l'écart d'énergie $E'_0$-$E_0$ est grand devant kT, si bien que ce rapport est très sensible à la température. La mesure de ce rapport d'intensités de fluorescence permet donc de calculer la température.

En résumé, à l'aide d'un laser, notamment ArF, on peut illuminer l'air ambiant sur une tranche de profondeur relativement importante pour exciter, dans deux bandes différentes de Schumann-Runge, deux raies d'absorption "identiques", c'est-à-dire presque confondues, par rapport auxquelles la raie d'émission laser est très fine.

S'agissant de ces bandes particulières, pour lesquelles la probabilité de prédissociation de l'état excité est déterminante, le rapport des coefficients d'absorption ne dépend que de la température et les rendements de fluorescence sont indépendants de la température et de la pression. Le rapport des énergies de fluorescence (rapport des nombres de photons de fluorescence) dans deux bandes différentes et résultant des transitions d'absorption ne dépend donc que de la température. Il suffit de le mesurer pour déterminer cette température.

Ayant décrit les principes théoriques sur lesquels s'appuye l'invention, celle-ci peut maintenant être abordée.

Système de mesure

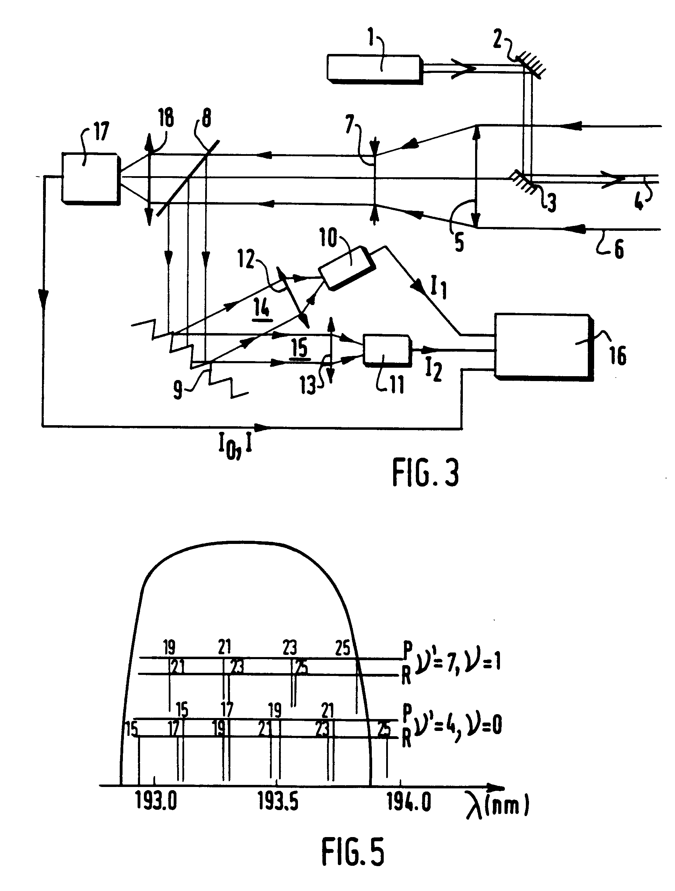

Le système de mesure, représenté sur la figure 3, comporte, ici, un générateur laser ArF à excimère l, ici encore, de longueur d'onde sensiblement égale à 193 nm, émettant dans l'espace, par l'intermédiaire de deux miroirs de réflexion 2 et 3, un faisceau d'excitation 4, une lentille 5 de réception du faisceau de fluorescence 6 résultant de l'excitation des molécules d'air, une lentille de focalisation 7, une lame dichroïque 8 de réflexion du faisceau de fluorescence 6 et de transmission du faisceau de rétrodiffusion, un réseau 9, sur lequel le faisceau 6 se réfléchit selon un angle de réflexion dépendant de la fréquence, pour séparer ces deux énergies de fluorescence 14, 15, deux détecteurs 10, 11 recevant respectivement les deux énergies de fluorescence, par l'intermédiaire de deux lentilles de focalisation 12, 13, un détecteur 17 recevant l'énergie de rétrodiffusion, par l'intermédiaire d'une lentille de focalisation 18, et un module de traitement et calcul 16.

Toutes les optiques sont de qualité ultraviolet, par exemple en silice UV.

Les détecteurs 10, 11, 17 comportent, chacun, un tube à vide photomultiplicateur à effet photovoltaïque, en tant qu'amplificateur, et un filtre convenablement accordé.

Procédé de mesure

1. Mesure de la température

La durée de vie des états excités $E_1$ et $E'_1$ est très courte, inférieure à 10 ps, du fait de la prédissociation. La fluorescence d'un volume donné ne se produit, par conséquent, que pendant le passage d'une impulsion laser de durée $\tau$ . En conséquence, le volume de mesure peut être délimité de manière temporelle par la durée de l'impulsion laser, ce qui permet avantageusement de simplifier le système optique.

L'émetteur 1 et les récepteurs 10, 11 étant pratiquement à un même endroit origine 0, le diagramme d'émission et de fluorescence peut être représenté en fonction de deux variables, le temps t et la distance d de mesure, ou de sondage, le long du faisceau laser 4 (figure 4). Sur cette figure a été représentée la trajectoire spatiotemporelle d'une impulsion laser de durée .

A chaque instant t, supérieur ou égal à $\tau$ , la fluorescence reçue provient d'une tranche spatiale AB de profondeur c $\frac{\tau}{2}$ , c étant la vitesse de la lumière. Pendant la durée d'analyse $\tau'$ la tranche d'observation instantanée se déplace, à la vitesse c, de AB en CD, c'est-à-dire d'une distance c $\frac{\tau'}{2}$ . La tranche spatiale globale observée,

$$\left\{ B\left(c\frac{t-\tau}{2}\right) - C\left(c\frac{t+\tau'}{2}\right) \right\} \; ,$$

a une profondeur de

$$c\frac{\tau+\tau'}{2} \; .$$

Pendant cette durée d'analyse $\tau'$, on mesure par les détecteurs 10 et 11, les énergies de fluorescence 14, 15 dans deux bandes différentes de Schumann-Runge.

Plus précisément, les photomultiplicateurs 10, 11 délivrent au module 16 deux courants $I_1$ et $I_2$ qui sont intégrés pendant des durées dépendant de la tranche d'air sondée et de son éloignement, avant que les deux intégrales ne soient calculées et leur rapport déterminé.

Comme indiqué ci-dessus, le rapport

$$Ke^{-\frac{E'_0 - E_0}{kT}}$$

des signaux détectés, mis en mémoire dans le module 16, permet de calculer la température T. Naturellement, le système de mesure aura, au préalable, été étalonné.

2. Mesure de la densité

Il est décrit ci-après une mesure à deux raies laser.

La figure 7 représente le diagramme spatiotemporel d'émission et de rétrodiffusion relatif à l'une des deux raies laser.

Deux impulsions laser sont émises successivement, l'une $P_o$ à une fréquence $\omega_o$ comprise à l'intérieur des raies R d'absorption de l'oxygène utilisées pour la mesure de température, l'autre P, à l'extérieur, de fréquence $\omega$ (figure 8). Les coefficients d'atténuation respectifs du faisceau sont respectivement $\alpha_o$, à l'intérieur de la raie, et $\alpha$, à l'extérieur. $W_o$ et W étant ainsi respectivement les énergies rétrodiffusées pour chacune des deux impulsions laser et mesurées par le détecteur 17, qui délivre deux courants $I_0$ et I qui sont intégrés pendant des durées finies $(t_2-t_1)$ dans le module 16, ce dernier calcule le rapport des énergies rétrodiffusées aux deux instants $t_1$ et $t_2$ correspondant aux distances

$$D_1 = c\frac{t_1}{2} \quad et \quad D_2 = c\frac{t_2}{2} \; .$$

Le module 16 calcule le rapport.

$$\frac{W_o(D_2)}{W_o(D_1)} \cdot \frac{W(D_1)}{W(D_2)}$$

et on déduit ($\alpha_o$-$\alpha$) suivant la relation approchée

$$\frac{W_o(D_2)}{W_o(D_1)} \cdot \frac{W(D_1)}{W(D_2)} \simeq e^{-2(\alpha_o-\alpha)(D_2-D_1)}$$

Comme on peut écrire la relation

$$\alpha_o - \alpha = N_o \left[ \frac{A}{T} e^{-\frac{E_1}{kT}} + \frac{B}{T} e^{-\frac{E_2}{kT}} \right]$$

dans laquelle

$N_o$ est la densité moléculaire de l'oxygène,

T est la température, déterminée par ailleurs,

$E_1$ et $E_2$ sont les énergies des niveaux inférieurs des deux transitions utilisées pour la mesure de T,

A et B sont des constantes,

le module 16 en déduit $N_o$.

Cas pratique de mesure

1)Température

Il n'est donné vraiment qu'à titre d'exemple.

L'analyse de fluorescence n'est effectuée qu'après la première impulsion laser de durée $\tau$ = 10 ns, entre les instants t = 70 ns et t + $\tau'$ = 100 ns ($\tau'$ = 30 ns). La tranche d'air sondée s'étend donc entre deux plans, passant par B et C en référence à la figure 4, et distants de 9 m et 15 m, respectivement.

Il est procédé au calcul des deux intégrales

$$J_1 = \int_t^{t+\tau'} I_1 dt \qquad J_2 = \int_t^{t+\tau'} I_2 dt$$

Du rapport

$$\frac{J_1}{J_2} = K e^{-\frac{E'_o - E_o}{kT}}$$

on tire T.

La température est en fait déterminée après chaque impulsion laser.

2)Densité

L'analyse de rétrodiffusion est effectuée après chacune des deux impulsions laser. On choisit les intervalles de temps [$t_1$, $t_2$] et [$t_3$, $t_4$] après chaque impulsion laser, les instants étant repérés par rapport au début de l'impulsion.

On peut par exemple considérer

$t_1$ = 70 ns

$t_2$ = 80 ns

$t_3 = 100$ ns

$t_4 = 110$ ns

L'intervalle $[t_1, t_2]$ correspond à un volume sondé s'étendant entre 9 m et 12 m de distance; l'intervalle $[t_3, t_4]$ correspond à un volume s'étendant entre 13,5 m et 16,5 m. Le module 16 calcule les intégrales

$$\overset{o}{A}_{12} = \int_{t_1}^{t_2} I_o \, dt$$

$$\overset{o}{A}_{34} = \int_{t_3}^{t_4} I_o \, dt$$

$$A_{12} = \int_{t_1}^{t_2} I \, dt$$

$$A_{34} = \int_{t_3}^{t_4} I \, dt$$

ensuite le rapport

$$\frac{\overset{o}{A}_{34}}{\overset{o}{A}_{12}} \cdot \frac{A_{12}}{A_{34}}$$

puis, T étant connue, la densité moléculaire d'oxygène $N_o$, la densité moléculaire d'air sec $N_A$ et enfin la pression p, selon la relation définie plus haut. La pression est en fait aussi déterminée après chaque paire d'impulsions laser.

Choix du couple des raies d'absorption

L'examen des bandes de Schumann-Runge de l'oxygène montre qu'il existe quelques couples de raies d'absorption confondues pouvant servir à la mesure de la température.

Dans la bande d'accrochage du laser ArF (figure 5) il existe un certain nombre de raies appartenant notamment aux deux bandes

$[X_0, B_4]$

$[X_1, B_7]$

les indices 0, 1, 4, 7 des états électroniques X, B représentant des numéros de niveau vibratoire (nombre quantique vibrationnel) associé à ces états électroniques. Il s'agit des raies

P17 de la bande $X_0$, $B_4$

R23 de la bande $X_1$, $B_7$

et

R19 de la bande $X_0$, $B_4$

P21 de la bande $X_1$, $B_7$

P et R, dans les bandes considérées, correspondent aux branches pour lesquelles la différence entre les moments orbitaux des deux états B et X est égal à -1 et +1, respectivement. Les raies du premier couple sont confondues à mieux que 0,1 cm$^{-1}$ et celles du second couple ne sont distants que de 2 cm$^{-1}$ environ.

La largeur de raie, due à la prédissociation, est d'environ 3,4 cm$^{-1}$ pour la bande $[X_0, B_4]$ et de 1,4 cm$^{-1}$ pour la bande $[X_1, B_7]$ : les raies considérées se recouvrent bien.

Le choix du couple de raies doit être déterminé par la distance de sondage pour optimiser le rapport signal/bruit. Pour une distance d'une dizaine de mètres, le coefficient d'absorption des raies de la bande $[X_0, B_4]$ est trop fort pour une pression de 1 bar et il vaut mieux alors retenir le couple de raies décalées de 2 cm$^{-1}$ et ajuster la fréquence du laser au centre de la raie de la bande $[X_1, B_7]$.

Bandes de fluorescence

Les bandes de fluorescence [B, X] issues des niveaux $B_4$ et $B_7$ doivent être, d'une part, intenses et, d'autre part, faiblement absorbées. En outre, les longueurs d'onde de fluorescence doivent être choisies supérieures à 240 nm pour être extérieures au continuum d'Herzberg de l'oxygène (Herzberg continuum cross section of oxygen, Cheung et al. Canadian Journal of Physics, vol. 62, pages 1752-1762, 1984).

Toutes les bandes de fluorescence intéressantes tombent cependant dans la bande de Hartley de l'ozone qui constitue un continuum d'absorption s'étendant jusqu'à 360 nm. Le maximum d'absorption se produit à 255 nm et la concentration d'ozone est maximale vers 20 km d'altitude, avec un coefficient d'absorption $\alpha_{max} = 5.10^{-3} m^{-1}$. Il a été constaté que deux bandes de fluorescence intenses, parmi d'autres, voisines du maximum d'absorption de l'ozone, étaient notamment utilisables. Il s'agit des bandes

$[B_4, X_8]$

$[B_7, X_9]$

de longueurs d'ondes respectives 249 nm et 247 nm.

Dans le système de l'invention tel que décrit en référence à la figure 3, les détecteurs 10, 11 sont accordés sur les fréquences correspondantes qui sont séparées par le réseau 9. L'écart d'absorption de l'ozone étant faible, son influence sur le rapport des énergies de fluorescence transmises est négligeable entre 0 et 30 km d'altitude. En effet, on peut démontrer facilement que, si l'écart maximal du coefficient d'absorption est de $5\ 10^{-4} m^{-1}$, la variation relative maximale du rapport de transmission est de $5\ 10^{-3}$ pour une distance de 10 m. A une telle variation correspond une variation relative de température dix fois plus faible. A une température de 300 K, la variation maximale de température est donc de 0,15 K.

Il faut noter que les performances du procédé et du système de mesure de l'invention sont limitées par le bruit photonique de détection. Mais avec, par exemple, les distances de mesure considérées plus haut, une énergie d'impulsion laser de 0,01 J, une surface d'optique de réception de 100 cm$^2$ et une moyenne de mesures effectuée sur dix tirs, entre 0 et 20 km d'altitude, les incertitudes efficaces de calcul dues au bruit photonique sont inférieures à 0,5 K pour la température et à 0,7 % pour la densité d'oxygène.

Le procédé de mesure qui vient d'être décrit s'appuyait sur un couple de raies d'absorption dans la bande d'accrochage du laser ArF.

La demanderesse a cherché, en dehors de la bande de ce laser, tous les couples de raies confondues utilisables sur deux bandes $[X_{V1}, B_{V1}]$ et $[X_{V2}, B_{V2}]$.

Les nombres quantiques vibrationnels $v_1$ et $v_2$ de l'état fondamental doivent être égaux à 0 ou 1, pour que la population des états correspondants, et donc l'absorption, soient suffisantes. Le nombre $v'_1$ a été limité à 4, car les raies des bandes $[X_0, B_{V>4}$ sont trop absorbantes pour une distance de 10 m. Les valeurs de v' égales à 0 et 2 ont été éliminées car, pour elles, le taux de prédissociation n'est pas assez fort pour que le profil de la raie soit indépendant de la pression. Ces restrictions étant posées, deux autres couples de raies confondues ont pu être trouvés. Il s'agit des raies

R25 de la bande $X_0, B_3$

R 9 de la bande $X_1, B_5$

à une longueur d'onde $\lambda = 196,2$ nm,

R21 de la bande $X_0, B_1$

R 5 de la bande $X_1, B_3$

à une longueur d'onde $\lambda = 200,9$ nm,

ce dernier couple étant toutefois moins intéressant car les coefficients d'absorption sont faibles. Pour le premier couple, on pourrait utiliser un laser à alexandrite, après multiplication de la fréquence par quatre. Dans ce dernier cas, les bandes de fluorescence issues des niveaux $B_3$, $B_5$ qui pourraient être utilisées seraient $[B_3, X_8]$ et $[B_5, X_{10}]$.

**Revendications**

1. Procédé de mesure optique à distance de la pression de l'air par excitation laser, dans lequel, ayant déterminé la température de l'air, on provoque, à l'aide d'un générateur laser de raie très fine et par excitation d'une raie d'absorption de l'oxygène moléculaire, un rayonnement rétrodiffusé, on mesure les énergies rétrodiffusées à deux distances différentes, on détermine le rapport de ces énergies, on en déduit un coefficient d'absorption, fonction de la température et de la densité moléculaire d'oxygène, et on calcule la densité et donc la pression, caractérisé par le fait qu'on excite une raie d'absorption appartenant à une bande de Schumann-Runge de l'oxygène moléculaire et que la raie d'absorption est très large par rapport au spectre de diffusion Rayleigh.

2. Procédé de mesure selon la revendication 1, dans lequel le générateur laser émet deux raies d'émission successives très fines par rapport à la raie d'absorption et décalées en fréquence.

3. Procédé de mesure selon la revendication 2, dans lequel l'une des raies d'émission laser se trouve à l'intérieur de la raie d'absorption, l'autre, à l'extérieur.

4. Procédé de mesure selon l'une des revendications 1 à 3, dans lequel on calcule la pression après chaque impulsion laser.

5. Procédé de mesure selon l'une des revendications 1 à 4, dans lequel, pour déterminer la température, on procède à une mesure optique à distance et on excite, à l'aide du générateur laser, deux raies d'absorption qui au moins se recouvrent et qui appartiennent respectivement à deux bandes différentes de Schumann-Runge de l'oxygène moléculaire, la raie d'émission du générateur laser a une largeur très faible par rapport à celle des raies d'absorption et sa fréquence centrale est ajustée pour être au voisinage des maxima des deux raies d'absorption, on provoque la fluorescence de l'oxygène, on mesure les intensités de fluorescence induite dans deux bandes différentes, on détermine le rapport de ces intensités et on en déduit la température.

6. Procédé de mesure selon l'une des revendications 1 à 5, dans lequel on excite au moins une des bandes de Schumann-Runge de nombre quantique vibrationnel de l'état fondamental 0 ou 1.

7. Procédé de mesure selon la revendication 6, dans lequel on utilise un laser ArF et on excite au moins l'une des deux bandes $[X_0, B_4]$ et $[X_1, B_7]$.

8. Procédé de mesure selon la revendication 7, dans lequel on excite au moins l'une des deux raies P17 de la bande $[X_0, B_4]$ et R23 de la bande $[X_1, B_7]$.

9. Procédé de mesure selon la revendication 7, dans lequel on excite au moins l'une des deux raies R19 de la bande $[X_0, B_4]$ et P21 de la bande $[X_1, B_7]$.

10. Procédé de mesure selon la revendication 9, dans lequel on ajuste la fréquence du générateur au centre de la raie P21 de la bande $[X_1, B_7]$.

11. Procédé de mesure selon la revendication 6, dans lequel on excite au moins d'une des raies d'absorption R25 de la bande $[X_0, B_3]$ et R9 de la bande $[X_1, B_5]$.

12. Procédé de mesure selon l'une des revendications 1 à 11, dans lequel on détermine la température et la pression de l'air en avant d'un aéronef dans une tranche d'air sans perturbations aérodynamiques et on en déduit des paramètres de vol de l'aéronef qu'on utilise pour son pilotage.

13. Système de mesure pour la mise en oeuvre du procédé de l'une des revendications 1 à 12, comportant un générateur laser (1) émettant un rayonnement de raie très fine, une optique (2, 3) d'émission du rayonnement d'excitation, une optique (5, 7, 8) de réception du rayonnement de fluorescence et de rétrodiffusion, des moyens (8) de séparation du rayonnement de rétrodiffusion et du rayonnement de fluorescence, un détecteur (17) de réception du rayonnement de rétrodiffusion, des moyens (9) de séparation des deux énergies de fluorescence, des détecteurs (10, 11) accordés respectivement sur les fréquences de fluorescence et un module (16) de traitement et calcul.

**14.** Système selon la revendication 13, dans lequel le générateur laser (1) est un générateur laser ArF à excimère émettant au moins un faisceau parallèle monochromatique de raie très fine centrée sur une longueur d'onde sensiblement égale à 193 nm.

## Claims

**1.** Method for the remote optical measurement of the air pressure by laser excitation, in which, having determined the temperature of the air, there is caused, by means of a laser generator producing a very fine line and by excitation of an absorption line of molecular oxygen, a retrodiffused radiation, the retrodiffused energies are measured at two different distances, the ratio of these energies is determined, a coefficient of absorption is deduced therefrom, which is dependent on the temperature and the molecular density of oxygen and the density and therefore the pressure is calculated, characterised by the fact that one excites an absorption line belonging to a Schumann-Runge band of molecular oxygen and that the absorption line is very wide with respect to the Rayliegh diffusion Spectrum.

**2.** Measuring method according to Claim 1, in which the laser generator emits two successive emission lines which are very fine with respect to the absorption line and which are staggered as regards frequency.

**3.** Measuring method according to Claim 2, in which one of the laser emission lines is located inside the absorption line, the other is outside.

**4.** Measuring method according to one of Claims 1 to 3, in which the pressure after each laser pulse is calculated.

**5.** Measuring method according to one of Claims 1 to 4, in which, in order to determine the temperature, one proceeds with a remote optical measurement and one excites, by means of the laser generator, two absorption lines which at least overlap and which belong respectively to two different Schumann-Runge bands of molecular oxygen, the emission line of the laser generator has a very small width with respect to that of the absorption lines and its central frequency is adjusted in order to be in the vicinity of the maxima of two absorption lines, the fluorescence of oxygen is caused, the intensities of fluorescence induced in two different bands are measured, the ratio of these intensities is determined and the temperature is deduced therefrom.

**6.** Measuring method according to one of Claims 1 to 5, in which one excites at least one of the Schumann-Runge bands of vibrational quantic number of the basic state 0 or 1.

**7.** Measuring method according to Claim 6, in which one uses an ArF laser and one excites at least one of the two bands $[X_O, B_4]$ and $[X_1, B_7]$.

**8.** Measuring method according to Claim 7, in which one excites at least one of the two P17 lines of the band $[X_O, B_4]$ and R23 of the band $[X_1, B_7]$.

**9.** Measuring method according to Claim 7, in which one excites at least one of the two lines R19 of the band $[X_O, B_4]$ and P21 of the band $[X_1, B_7]$.

**10.** Measuring method according to Claim 9, in which one adjusts the frequency of the generator to the centre of the line P21 of the band $[X_1, B_7]$.

**11.** Measuring method according to Claim 6, in which one excites at least one of the absorption lines R25 of the band $[X_O, B_3]$ and R9 of the band $[X_1, B_5]$.

**12.** Measuring method according to one of Claims 1 to 11, in which one determines the temperature and the air pressure in front of an aircraft in a portion of air without aerodynamic disturbances and one deduces therefrom flying parameters of the aircraft which are used for its piloting.

**13.** Measuring system for carrying out the method of one of Claims 1 to 12, comprising a laser generator (1) emitting radiation having a very fine line, an optical system (2, 3) for the emission of the excitation radiation, an optical system (5, 7, 8) for receiving the fluorescence and retrodiffusion radiation, means (8) for separating the retrodiffusion radiation and the fluorescence radiation, a detector (17) for receiving the retrodiffusion radiation, means (9) for the separation of two fluorescence energies, detectors (10, 11) tuned respectively to the fluorescence frequencies and a module (16) for processing and calculation.

14. System according to Claim 13, in which the laser generator (1) is an ArF excimer laser generator emitting at least one parallel monochromatic beam having a very fine line centered on a wavelength substantially equal to 193 nm.

**Patentansprüche**

1. Optisches Verfahren zur Messung des Luftdrucks auf Entfernung über Laseranregung, wobei nach Bestimmung der Lufttemperatur mit Hilfe eines Lasergenerators mit einer sehr schmalen Spektrallinie und durch Anregung einer Absorptionslinie von molekularem Sauerstoff eine Rückstreustrahlung hervorgerufen wird, die Rückstreuenergien in zwei unterschiedlichen Entfernungen gemessen werden, das Verhältnis dieser Energien bestimmt wird, daraus als Funktion der Temperatur und der molekularen Dichte des Sauerstoffs ein Absorptionskoeffizient abgeleitet wird und die Dichte und somit der Druck berechnet werden, dadurch gekennzeichnet, daß eine Absorptionslinie angeregt wird, die einer Schumann-Runge-Bande molekularen Sauerstoffs angehört, wobei die Ansorptionslinie im Verhältnis zum Rayleigh-Diffusionsspektrum sehr breit ist.

2. Meßverfahren nach Anspruch 1, dadurch gekennzeichnet, daß der Lasergenerator zwei aufeinanderfolgende Emissionslinien aussendet, die im Verhältnis zur Absorptionslinie sehr schmal und frequenzverschoben sind.

3. Meßverfahren nach Anspruch 2, dadurch gekennzeichnet, daß sich eine der Laser-Emissionslinien innerhalb der Absorptionslinie und die andere außerhalb davon befindet.

4. Meßverfahren nach einem der Ansprüche 1 bis 3, dadurch gekennzeichnet, daß der Druck nach jedem Laserimpuls berechnet wird.

5. Meßverfahren nach einem der Ansprüche 1 bis 4, dadurch gekennzeichnet, daß zur Bestimmung der Temperatur eine optische Messung auf Entfernung vorgenommen wird und mit Hilfe des Lasergenerators zwei Absorptionslinien erregt werden, die sich wenigstens überlappen und jeweils unterschiedlichen Schumann-Runge-Banden molekularen Sauerstoffs angehören, wobei die Emissionslinie des Lasergenerators eine sehr geringe Breite im Verhältnis zu der der Absorptionslinien aufweist und ihre Mittelfrequenz so eingestellt ist, daß sie sich in der Nähe der Maxima der beiden Absorptionslinien befindet, wobei die Fluoreszenz des Sauerstoffs ausgelöst wird, die Intensitäten der in zwei unterschiedlichen Banden induzierten Fluoreszenz gemessen werden, das Verhältnis dieser Intensitäten bestimmt wird und daraus die Temperatur abgeleitet wird.

6. Meßverfahren nach einem der Ansprüche 1 bis 5, dadurch gekennzeichnet, daß wenigstens eine der Schumann-Runge-Banden angeregt wird, deren Schwingungsquantenzahl des Grundzustands 0 oder 1 beträgt.

7. Meßverfahren nach Anspruch 6, dadurch gekennzeichnet, daß ein ArF-Laser verwendet wird und wenigstens einer der beiden Banden $[X_0, B_4]$ und $[X_1, B_7]$ angeregt wird.

8. Meßverfahren nach Anspruch 7, dadurch gekennzeichnet, daß wengistens eine der beiden Linien P17 der Bande $[X_0, B_4]$ und R23 der Bande $[X_1, B_7]$ angeregt wird.

9. Meßverfahren nach Anspruch 7, dadurch gekennzeichnet, daß wengistens eine der beiden Linien R19 der Bande $[X_0, B_4]$ und P21 der Bande $[X_1, B_7]$ angeregt wird.

10. Meßverfahren nach Anspruch 9, dadurch gekennzeichnet, daß die Frequenz des Generators auf die Mitte der Linie P21 der Bande $[X_1, B_7]$ eingestellt wird.

**11.** Meßverfahren nach Anspruch 6, dadurch gekennzeichnet, daß wenigstens eine der Absorptionslinien R25 der Bande $[X_0, B_3]$ und $R_9$ der Bande $[X_1, B_5]$ angeregt wird.

**12.** Meßverfahren nach einem der Ansprüche 1 bis 11, dadurch gekennzeichnet, daß die Temperatur und der Druck der Luft vor einem Luftfahrzeug in einer Luftzone ohne aerodynamische Störungen bestimmt wird und daraus Flugparameter des Luftfahrzeugs abgeleitet werden, die für dessen Steuerung verwendet werden.

**13.** Meßsystem zur Anwendung des Verfahrens nach einem der Ansprüche 1 bis 12, umfassend einen Lasergenerator (1), der eine sehr schmallinige Strahlung aussendet, eine Sendeoptik (2, 3) für die Anregungsstrahlung, eine Empfangsoptik (5, 7, 8) für die Fluoreszenz und Rückstreustrahlung, eine Einrichtung (8) zur Trennung der Rückstreustrahlung und der Fluoreszenzstrahlung, einen Detektor (17) zur Aufnahme der Rückstreustrahlung, eine Einrichtung (9) zur Trennung der beiden Fluoreszenzenergien, jeweils auf die Fluoreszenzen abgestimmte Detektoren (10, 11) sowie ein Verarbeitungs- und Rechenmodul (16).

**14.** System nach Anspruch 13, dadurch gekennzeichnet, daß der Lasergenerator (1) ein ArF-Excimer-Lasergenerator ist, der einen monochromatischen, parallelen Strahl aussendet, dessen Linie sehr schmal ist und auf eine Wellenlänge zentriert ist, die im wesentlichen gleich 193 nm ist.

EP 0 443 908 B1

FIG.1

FIG.2

FIG.4

16

FIG. 3

FIG.5

FIG.6

FIG.7

FIG.8